# FASCICULE DE BREVET EUROPEEN

(11) **EP 1 234 702 B1**
(45) Date de publication et mention de la délivrance du brevet: **26.10.2005**
(21) Numéro de dépôt: 02290302.5
(22) Date de dépôt: 07.02.2002
(51) Int. Cl.: B60J 5/10, B60J 5/12, B60P 3/42, B62D 25/08

(54) **Véhicule automobile de type break transformable en un véhicule à benne ouverte vers le haut**
Kombi-Kraftfahrzeug mit einem variablen Dach/Heckbereich
Estate vehicle transformable into pick-up

(30) Priorité: 26.02.2001 FR 0102595
(43) Date de publication de la demande: 28.08.2002
(73) Titulaire: Peugeot Citroen Automobiles SA, 92200 Neuilly sur Seine (FR)
(72) Inventeur: Levitre, Gilles, 92230 Gennevilliers (FR); Cazes, Christophe, 75009 Paris (FR)
(74) Mandataire: Lanceplaine, Jean-Claude

(56) Documents cités:
- EP-A- 0 618 129
- EP-A- 0 992 384
- EP-A- 1 084 882
- FR-A- 2 748 241
- FR-A- 2 803 565
- US-A- 4 626 024

## Description

La présente invention concerne un véhicule automobile de type break, transformable en un véhicule à benne ouverte vers le haut, appelé pick-up.

Les véhicules automobiles de type break comportent un habitacle ayant une partie avant contenant le poste de conduite du véhicule et au moins un siège avant et une partie arrière contenant au moins une rangée de sièges arrière escamotables de manière à constituer une partie d'un plancher plat s'étendant sur toute la partie arrière de l'habitacle du véhicule dans la position rabattue de ladite rangée de sièges arrière.

L'habitacle comporte, à son extrémité arrière, un ouvrant appelé hayon qui est généralement articulé à sa partie supérieure autour d'un axe transversal de telle manière que ce hayon puisse être déplacé entre une position abaissée de fermeture et une position relevée d'ouverture donnant accès, par l'arrière du véhicule, à la partie arrière de l'habitacle.

Ainsi, après avoir rabattu la rangée de sièges arrière, l'utilisateur dispose d'un volume de transport correspondant à l'ensemble de la partie arrière de l'habitacle accessible par l'ouverture dégagée lors du basculement vers le haut du hayon.

Les véhicules automobiles de type break permettent donc de transporter des charges volumineuses qui sont introduites dans le véhicule par l'ouverture arrière.

Toutefois, l'habitacle de ces véhicules est fermé par un toit, de sorte que l'espace de rangement et de transport à l'intérieur du véhicule est limité vers le haut.

De plus, ce type de véhicules automobiles comporte généralement deux parois délimitant latéralement la partie arrière de l'habitacle et qui comprennent des portes latérales arrière équipées de vitre dans leur partie supérieure et deux parties de carrosserie fixes ou custodes généralement équipées de vitre dans leur partie supérieure.

Les vitres des parties supérieures des parties latérales du véhicule, lorsque celui-ci est utilisé pour le transport d'objets volumineux, risquent d'être cassées, lors du chargement ou pendant le transport d'objets encombrants.

On connaît par ailleurs, des véhicules automobiles à benne ouverte vers le haut appelés pick-up qui comportent, à l'arrière d'une cabine constituée par la partie antérieure de l'habitacle du véhicule renfermant le poste de conduite, la benne ouverte vers le haut de forme générale parallélépipédique.

La benne ouverte de ce type de véhicules comporte un plancher, deux parois latérales dans la direction longitudinale du véhicule et une paroi d'extrémité arrière ouvrante située à l'opposé de la cabine.

De tels véhicules présentent des avantages en ce qui concerne leur capacité de chargement par rapport à un véhicule classique ou même par rapport à un véhicule de type break, puisque le niveau de chargement de la benne est pratiquement illimité du fait de l'absence d'un toit recouvrant la benne.

Toutefois, les véhicules de type pick-up ne peuvent être utilisés qu'à des fins utilitaires et seulement par le conducteur et éventuellement un passager, ce qui limite leur intérêt dans le cas de leur utilisation par des particuliers.

En outre, ces véhicules sont difficilement utilisables sur de long parcours routier ou autoroutier.

On connaît dans le document FR-A-2 748 241, un véhicule automobile de type break et transformable en un véhicule à benne ouverte vers le haut et qui comporte une rangée de sièges arrière déplaçable entre une position d'utilisation et une position escamotée, un pavillon comportant une partie fixe et une partie mobile et un hayon pivotant dont la partie supérieure forme une vitre arrière escamotable de manière coulissante à l'intérieur d'un partie inférieure de ce hayon. Ce document couvre le sujet du préambule de la revendication 1.

L'invention a pour but de proposer un véhicule automobile utilisable aussi bien pour le transport de charges que pour le transport de passagers et qui est facilement transformable par des moyens simples et économiques afin de cumuler les avantages des véhicules automobiles de type break et de type pick-up.

L'invention a donc pour objet un véhicule automobile de type break transformable en un véhicule à benne ouverte vers le haut, appelé pick-up, et comportant un habitacle ayant un poste avant contenant une porte de conduite et au moins un siège avant et une partie arrière comportant au moins une rangée de sièges arrière comprenant au moins une assise et au moins un dossier déplaçables entre une position d'utilisation et une position escamotée dans laquelle ladite assise est basculée sensiblement verticalement derrière ledit siège avant et ledit dossier est basculé vers l'avant du véhicule dans le prolongement du plancher et délimitée par :
- un plancher,
- deux parois latérales,
- un pavillon couvrant l'ensemble de l'habitacle et comportant, successivement dans une direction longitudinale du véhicule et de l'avant vers l'arrière, une partie fixe et une partie mobile déplaçable entre une position sensiblement horizontale dans le prolongement de ladite partie fixe et une position escamotée dans la configuration à benne ouverture du véhicule, et
- à sa partie postérieure, par un hayon pivotant dont une partie supérieure forme une vitre arrière escamotable de manière coulissante à l'intérieur d'une partie inférieure de ce hayon,
caractérisé en ce qu'il comporte des moyens séparant la partie avant de l'habitacle constituant une cabine par rapport à la partie arrière dudit habitacle dans la configuration à benne ouverte du véhicule et dans la position d'utilisation de la rangée de sièges arrière et des moyens de séparation de l'habitacle derrière ledit siège avant dans la position escamotée de la rangée de sièges arrière.

Selon d'autres modes particuliers de réalisation de l'invention :
- les parois latérales comportent chacune, dans la partie arrière de l'habitacle, une vitre de custode escamotable par basculement à l'intérieur d'un coffre ménagé dans la paroi latérale correspondante, ladite vitre de custode étant escamotée dans la configuration à benne ouverte du véhicule,
- la partie mobile du pavillon est déplaçable par translation au moyen de mécanismes de coulissement entre la position prolongeant la partie fixe et la position escamotée au-dessus de ladite partie fixe,
- la partie mobile est formée par un cadre comportant une ouverture munie d'une vitre déplaçable, dans la configuration break du véhicule, entre une position ouverte et une position fermée,
- les moyens de séparation de la partie avant par rapport à la partie arrière de l'habitacle, dans la configuration à benne ouverte, sont formés par une vitre déplaçable par coulissement entre une position escamotée dans le dossier de la rangée de sièges arrière et une position déployée sensiblement verticale coopérant avec des éléments d'étanchéité disposés sur les parois latérales et le pavillon de l'habitacle,
- la partie mobile du pavillon est montée pivotante par une extrémité antérieure, autour d'un axe horizontal de direction transversale et situé à l'aplomb du dossier de la rangée de sièges arrière, entre la position prolongeant la partie fixe du pavillon et une position sensiblement verticale dans le prolongement de la partie arrière du dossier de la rangée de sièges arrière.

D'autres caractéristiques et avantages de l'invention apparaîtront au cours de la description qui va suivre, donnée à titre d'exemple et faite en se référant aux dessins annexés, sur lesquels :
- la Fig. 1 est une vue en perspective, de trois quarts arrière, d'un véhicule automobile dans sa première configuration ou configuration break,
- la Fig. 2 est une vue en perspective, de trois quarts arrière du véhicule automobile, dans sa seconde configuration à benne ouverte vers le haut ou configuration pick-up,
- les Figs. 3 à 6 sont des vues schématiques en coupe longitudinale montrant différentes configurations de l'habitacle du véhicule automobile, conforme à l'invention,
- la Fig. 7 est une demi-vue en coupe transversale du véhicule automobile montrant une vitre de custode en position fermée et en position escamotée,
- les Figs. 8 à 11 sont des vues partielles en coupe d'un premier mode de réalisation des éléments d'étanchéité des moyens de séparation de l'habitacle,
- les Figs. 12 et 13 sont des vues schématiques en coupe d'un second mode de réalisation des éléments d'étanchéité des moyens de séparation de l'habitacle,
- la Fig. 14 est une vue en perspective, de trois quarts arrière, d'une variante du véhicule automobile dans sa configuration break,
- la Fig. 15 est une vue en perspective, de trois quarts arrière, du véhicule automobile selon la Fig. 14, dans sa configuration pick-up,
- les Figs. 16 et 17 sont des vues schématiques en coupe longitudinale du véhicule montrant différents agencements de l'habitacle,
- les Figs. 18 à 20 sont des vues schématiques et partielles des éléments d'étanchéité des moyens de séparation de l'habitacle.

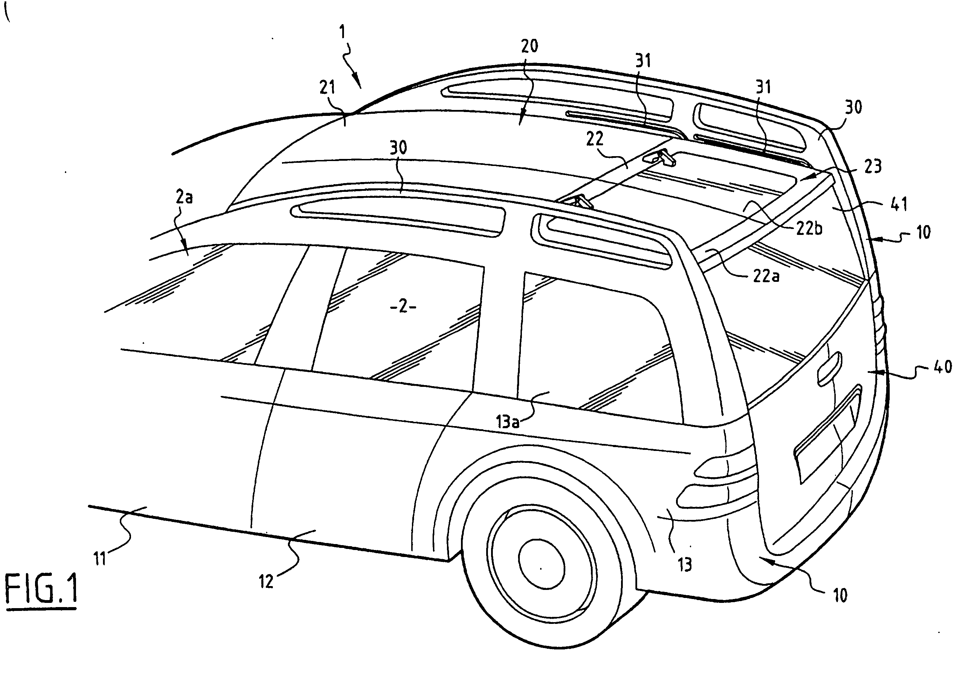

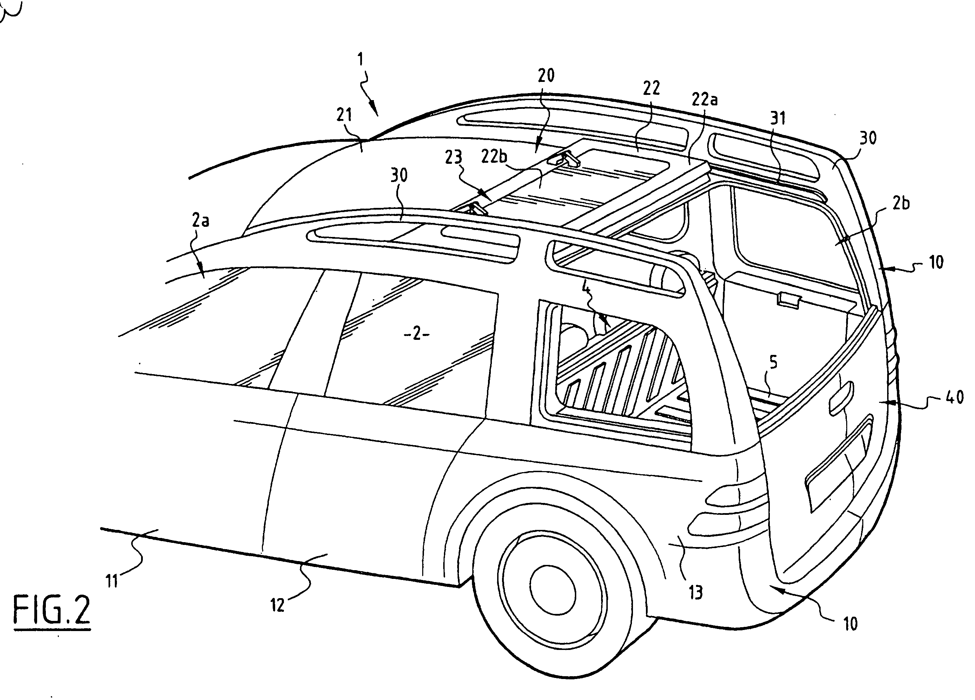

Sur les Figs. 1 et 2, on a représenté un véhicule automobile suivant l'invention de type break désigné de manière générale par la référence 1.

Le véhicule 1 comporte une carrosserie délimitant un habitacle 2, dont la partie avant 2a renferme un poste de conduite du véhicule automobile et au moins un siège avant 3 utilisé par le conducteur du véhicule.

Généralement, le véhicule comporte deux sièges avant, un siège de passager étant disposé à côté du siège du conducteur.

L'habitacle 2 comporte également une partie arrière 2b dans laquelle est disposée une rangée de sièges arrière 4 constituée, dans l'exemple de réalisation représenté sur les figures, par une banquette comprenant une assise 4a et un dossier 4b. La rangée de sièges arrière 4 peut également être constituée par deux ou trois sièges indépendants.

La partie arrière 2b de la l'habitacle 2 est délimitée par un plancher 5, deux parois latérales 10, un pavillon 20 couvrant l'ensemble de l'habitacle 2 et, à sa partie postérieure, par un hayon 40.

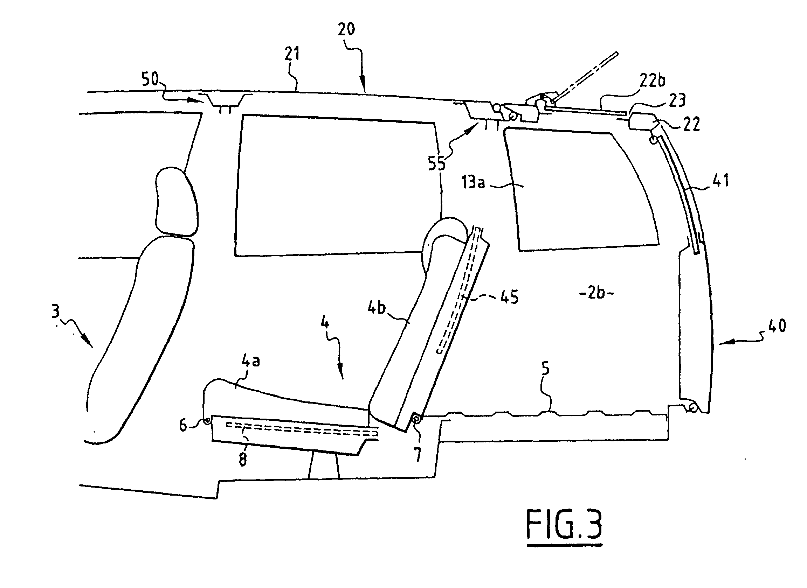

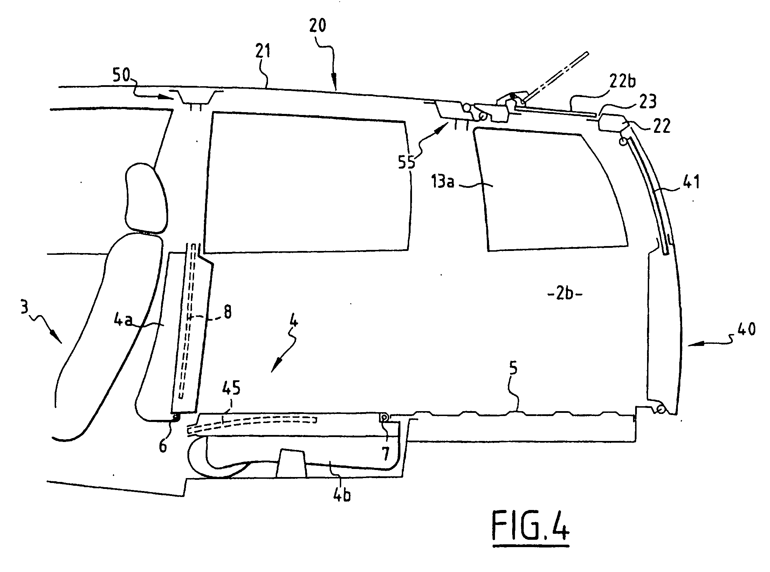

Ainsi que représenté sur les Figs. 3 et 4, l'assise 4a et le dossier 4b de la rangée de sièges arrière 4 sont déplaçables entre une position d'utilisation (Fig. 3) et une position escamotée (Fig. 4). Pour cela, l'assise 4a est articulée, à sa partie antérieure, sur le plancher 5 du véhicule automobile au moyen d'un axe 6 s'étendant transversalement par rapport à la direction longitudinale du véhicule. De même, le dossier 4b est articulé, à sa partie inférieure, sur le plancher 5 du véhicule automobile au moyen d'un axe 7 s'étendant transversalement par rapport à ladite direction longitudinale.

Dans la position escamotée de la rangée de sièges arrière 4, comme représentée à la Fig. 4, l'assise 4a est basculée sensiblement verticalement derrière le siège avant 3 et le dossier 4b est basculé vers l'avant du véhicule dans le prolongement du plancher 5 de façon à constituer une partie de la surface du plancher plat de l'habitacle 2, notamment pour le transport d'objets volumineux.

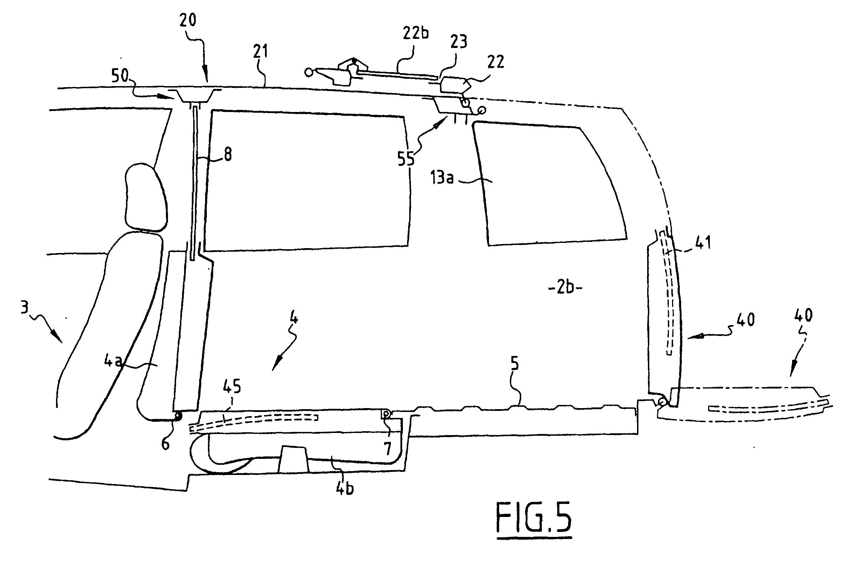

Dans la position escamotée de la rangée de sièges arrière 4, le poste de conduite de la partie avant 2a peut être isolé du reste de l'habitacle 2 par des moyens de séparation qui sont formés, comme représentés sùr les Figs. 4 et 5, par une vitre 8 déplaçable par coulissement entre une position escamotée dans l'assise 4a et une position déployée sensiblement verticale coopérant avec des éléments d'étanchéité 50 disposés sur les parois latérales 10 et sur la face interne du pavillon 20 de l'habitacle 2.

Chaque paroi latérale 10 est formée de l'avant jusqu'à l'arrière du véhicule automobile 1, par une porte avant 11, une porte arrière 12 et une custode 13 (Figs. 1 et 2). La custode 13 comporte une vitre 13a de custode dans sa partie supérieure.

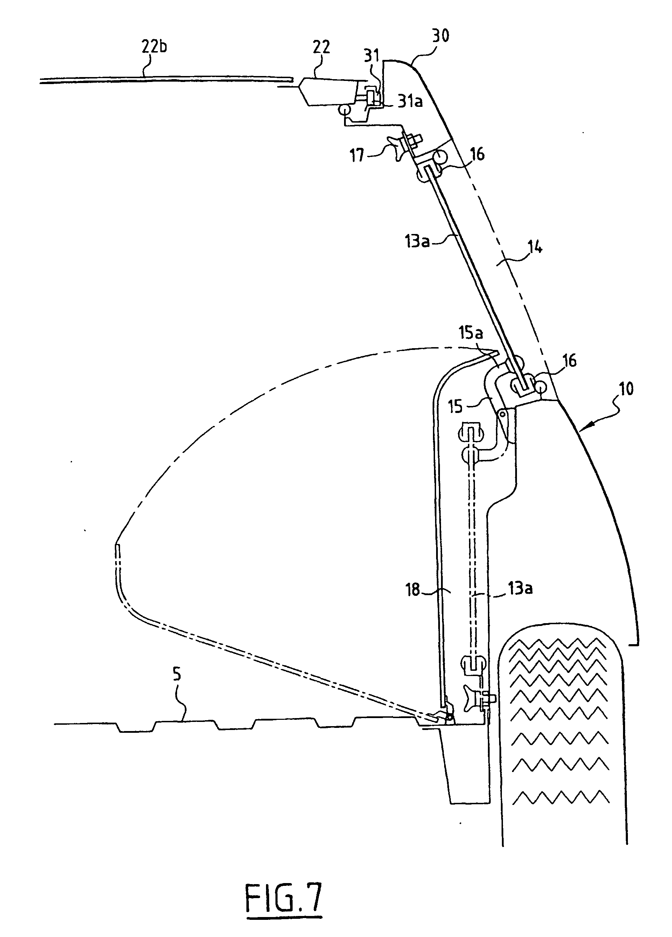

Ainsi que représenté à la Fig. 7, chaque vitre 13a de custode est effaçable par pivotement entre une position d'obturation d'une ouverture 14 ménagée dans la custode 13, comme représentée en trait plein à la Fig. 7 et une position de dégagement de cette ouverture 14, comme représentée en traits mixtes sur cette Fig. 7.

Pour cela, la vitre 13a de custode est articulée, à sa partie inférieure, sur la paroi latérale 10 correspondante au moyen d'au moins une bielle 15 dont une première extrémité 15a est fixée à la partie inférieure de la vitre 13a de custode et dont une seconde extrémité 15b est articulée sur la paroi latérale 10.

Les bords de la vitre 13a de custode sont équipés d'éléments d'étanchéité 16 destinés à coopérer avec les bords de l'ouverture 14 dans la position d'obturation de cette ouverture 14.

Par ailleurs, la vitre 13a de custode comporte également un organe de verrouillage 17 sur la paroi latérale 10 correspondante dans ladite position d'obturation de l'ouverture 14.

Dans la position escamotée de la vitre 13a de custode, cette vitre est dissimulée à l'intérieur d'un coffre 18 ménagé dans la paroi latérale 10 correspondante et par exemple le long des passages de roue arrière, ainsi que représenté à la Fig. 7.

Le pavillon 20 comporte, successivement dans une direction longitudinale du véhicule et de l'avant vers l'arrière, une partie fixe 21, opaque, qui peut être constituée par une tôle et, à l'arrière du dossier 4b de la rangée de sièges arrière 4, une partie mobile 22 déplaçable entre une position sensiblement horizontale dans le prolongement de ladite partie fixe 21 (Figs. 1, 4 et 14) et une position escamotée dans la configuration à benne ouverture du véhicule automobile 1 (Figs. 2, 5, 6 et 15).

Le hayon 40 disposé à l'arrière du véhicule automobile 1 de façon à constituer une cinquième porte, est monté pivotant, à sa partie inférieure, sur la carrosserie autour d'un axe d'articulation horizontal, non représenté, s'étendant transversalement par rapport à la direction longitudinale du véhicule.

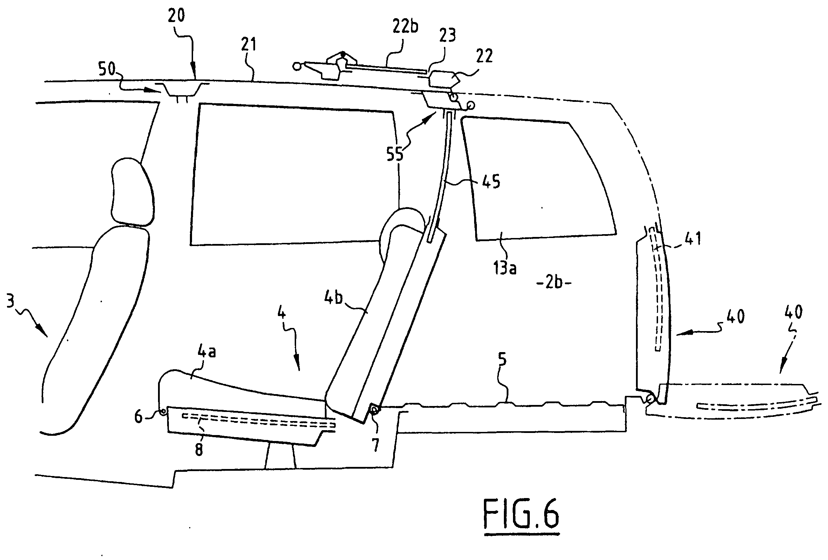

Ainsi, ce hayon 40 est déplaçable par pivotement entre une position sensiblement verticale d'obturation d'une partie de l'arrière du véhicule automobile, comme représentée en trait plein sur les Figs. 5 et 6. et une position sensiblement horizontale dans le prolongement du plancher 5, comme représentée en traits mixtes sur ces Figs. 5 et 6, de façon à augmenter la surface de chargement de ce plancher 5.

De plus, le hayon 40 comporte, dans sa partie supérieure, une vitre 41 constituant la lunette arrière du véhicule dans la configuration de type break. Cette vitre 41 est escamotable de manière coulissante à l'intérieur de la partie inférieure du hayon 40.

Selon un premier mode de réalisation représenté sur les Figs. 1 à 7, la partie mobile 22 du pavillon 20 est déplaçable par translation au moyen de mécanismes de coulissement entre la position prolongeant la partie fixe 21 (Figs. 1 et 4) et la position escamotée située au-dessus de ladite partie fixe 21 (Figs. 2, 5 et 6).

Les mécanismes de coulissement de la partie mobile 22 sont dissimulés dans des barres de toit 30 fixées sur les bords latéraux du pavillon 20 et ces mécanismes de coulissement sont formés par exemple par des galets 31 a (Fig. 7) disposés sur les bords latéraux de la partie mobile 22 et coopérant avec des glissières 31 ménagées dans les barres de toit 30, comme montré sur les Figs. 1 et 2.

Dans ce mode de réalisation, la partie mobile 22 est constituée dans un cadre 22a comportant une ouverture 23 munie d'une vitre 24 déplaçable, dans la configuration break du véhicule automobile 1, entre une position fermée représentée en trait plein à la Fig. 4 et une position ouverte représentée en pointillés sur cette Fig. 4, permettant ainsi de pouvoir transporter des objets de grande longueur et s'étendant à travers l'ouverture 23 dans la configuration de type break du véhicule automobile.

La partie mobile 22 du pavillon 21 est pourvue, à sa périphérie, d'éléments d'étanchéité, non représentés, avec les parties adjacentes de la carrosserie du véhicule automobile.

De plus, dans ce mode de réalisation où la partie mobile 22 du pavillon 20 est déplaçable par coulissement au-dessus de la partie fixe 21, le véhicule automobile 1 comporte des moyens de séparation de la partie avant 2a de l'habitacle 2 par rapport à la partie arrière 2b dudit habitacle 2 dans la configuration à benne ouverte du véhicule automobile et dans la position d'utilisation de la rangée de sièges arrière 4.

Comme montré sur les Figs. 3 à 6, ces moyens de séparation sont formés par une vitre 45 déplaçable par coulissement entre une position escamotée dans le dossier 4b de la rangée de sièges arrière 4 (Fig. 3) et une position déployée, sensiblement verticale (Fig. 6) coopérant avec des éléments d'étanchéité 55 disposés sur les parois latérales 10 et sur la face interne du pavillon 20 de l'habitacle 2.

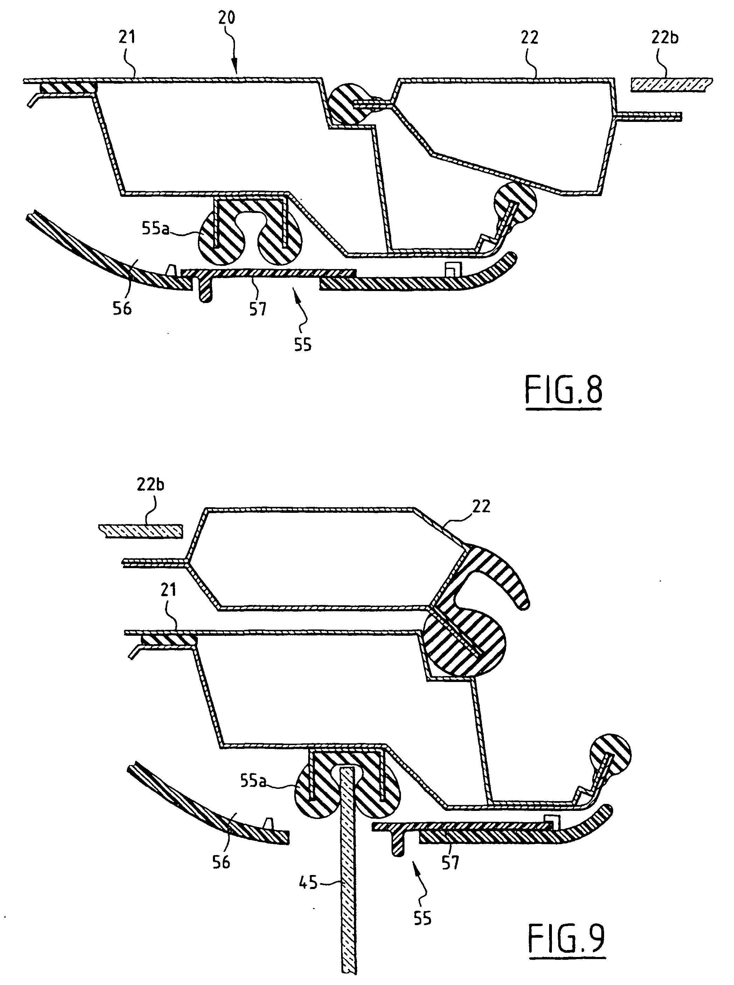

Selon un premier mode de réalisation représenté sur les Figs. 1 à 10, les éléments d'étanchéité 55 entre la vitre 45 et la face interne du pavillon 20 sont formés par au moins un joint d'étanchéité 55a longitudinal et en forme de U fixé dans un logement 56 ménagé sur ladite face interne du pavillon 20 et obturable par une trappe 57 coulissante.

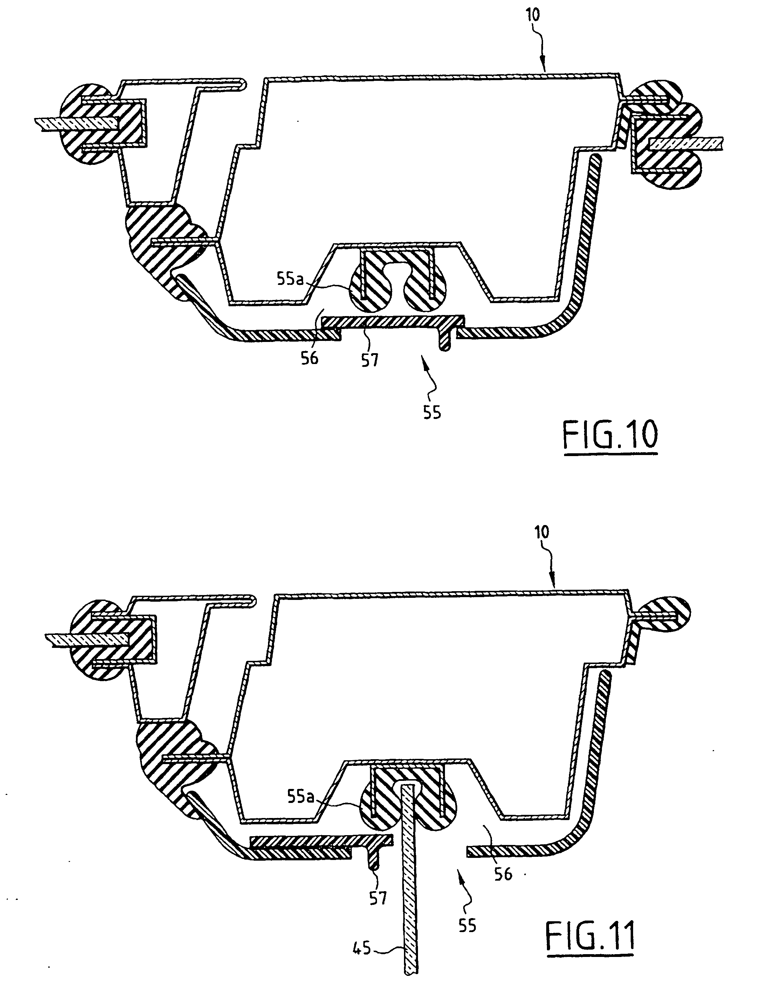

De même, les éléments d'étanchéité entre la vitre 45 et les deux parois latérales 10 de l'habitacle 2 sont formés par au moins un joint d'étanchéité 55a longitudinal et en forme de U, fixé dans un logement 56 ménagé dans lesdites parois latérales et obturable par une trappe 57 coulissante (Figs. 10 et 11).

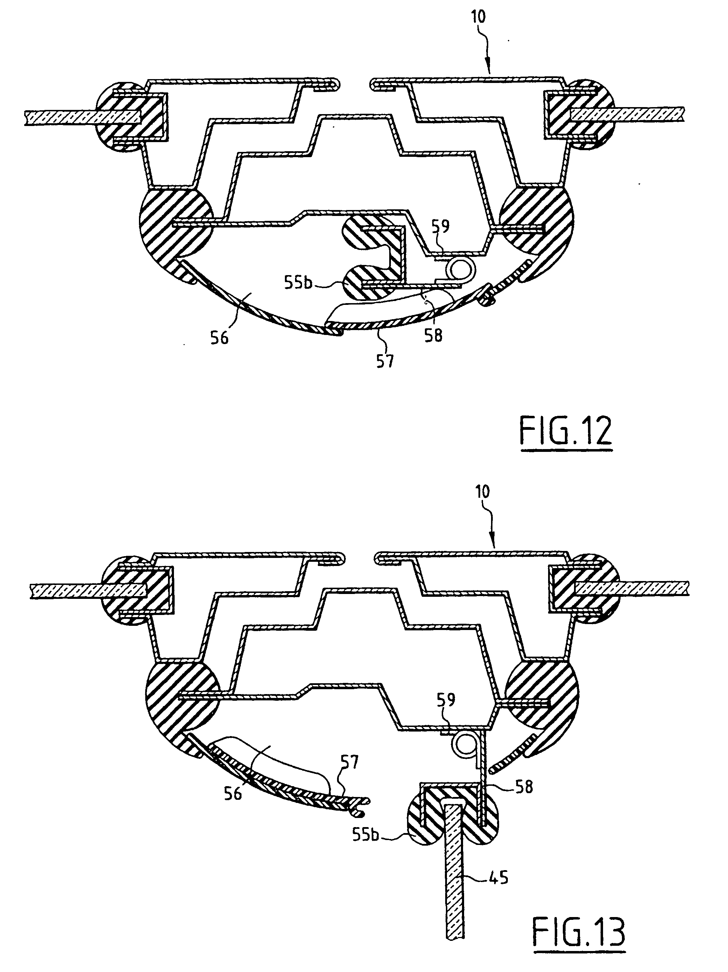

Selon une variante représentée sur les Figs. 12 et 13, les éléments d'étanchéité 55 sont formés chacun par un joint d'étanchéité 55b longitudinal et en forme de U. Ce joint 55b est monté sur un support 58 pivotant entre une position escamotée dans un logement 56 ménagé dans les parois latérales 10 et le pavillon 20 (Fig. 12) et une position en saillie de ce logement 56 permettant ainsi aux bords de la vitre 45 de pénétrer dans le joint d'étanchéité 55a. Le logement 56 est également obturable par une trappe 57 coulissante.

Le joint d'étanchéité 55b et le support 58 sont rappelés en position en saillie du logement 56 par un ressort de torsion 59 monté sur l'axe de pivotement du support 58.

Ainsi, lors du déploiement de la vitre 45, l'utilisateur ouvre les logements 56 en faisant coulisser les trappes 57 de telle manière que les bords de ladite vitre 45 pénètrent dans les joints d'étanchéité 55a et 55b. De même, les éléments d'étanchéité 50 entre la vitre 8 et les parois latérales 10 et la face interne du pavillon 20 peuvent être constitués par un joint d'étanchéité identique aux joints 55a ou aux joints 55b.

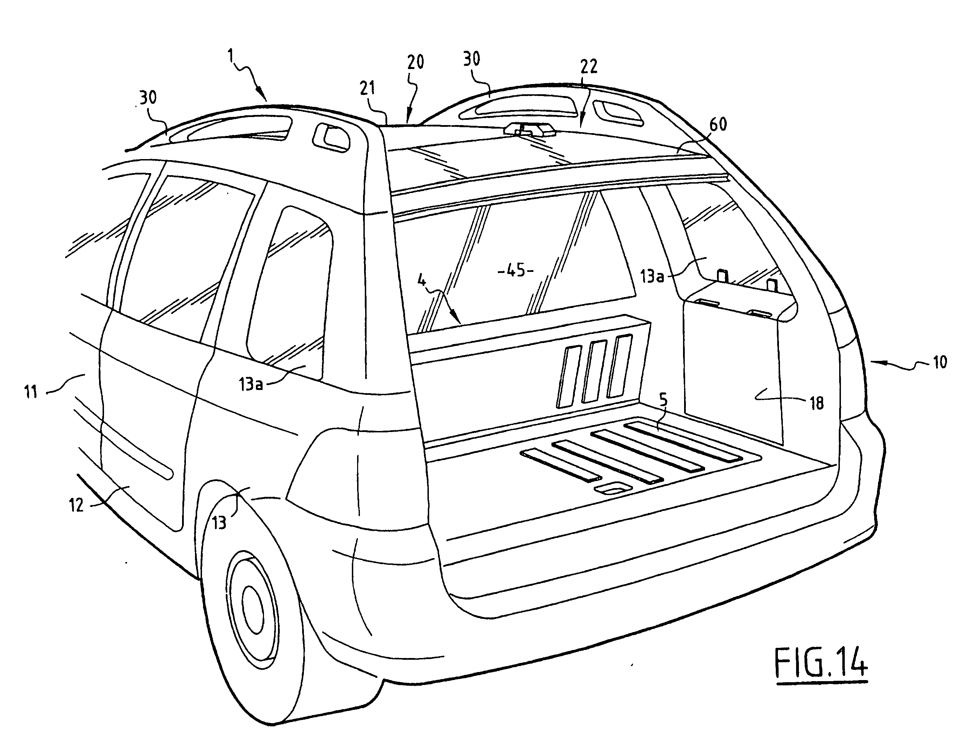

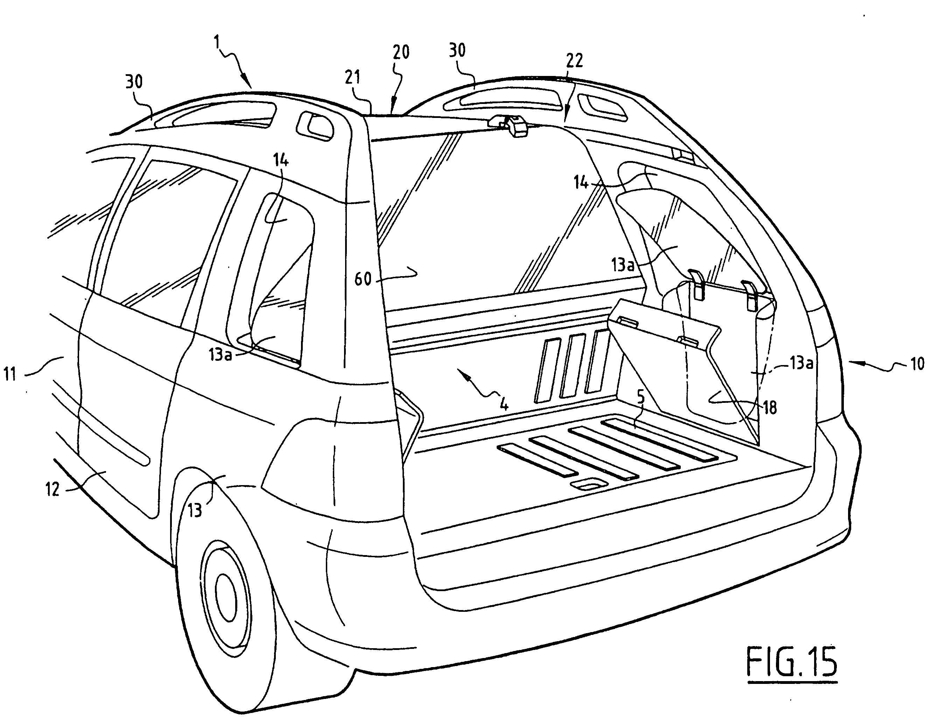

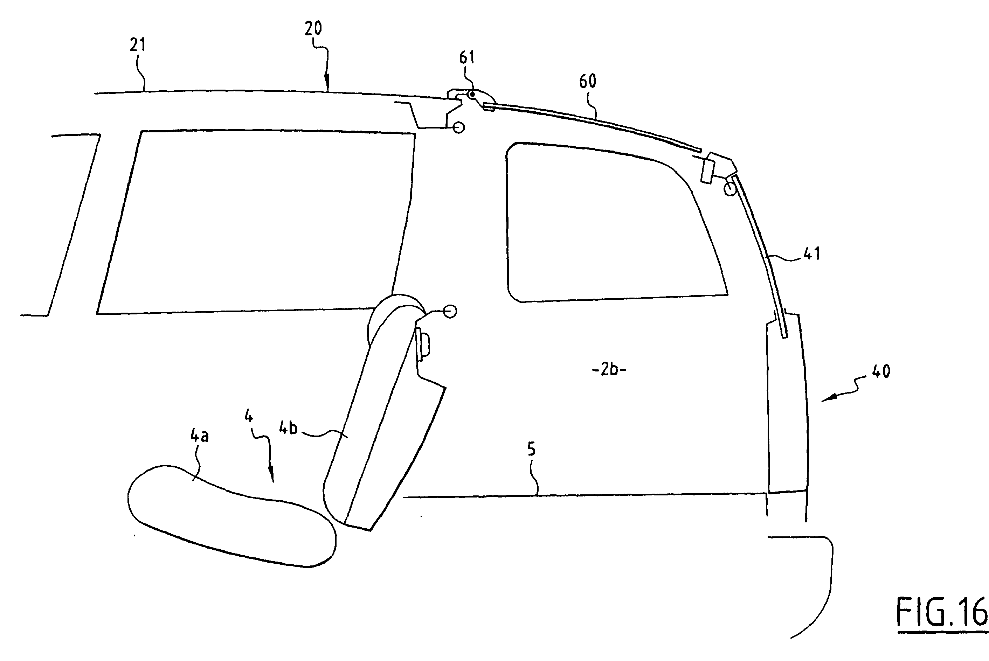

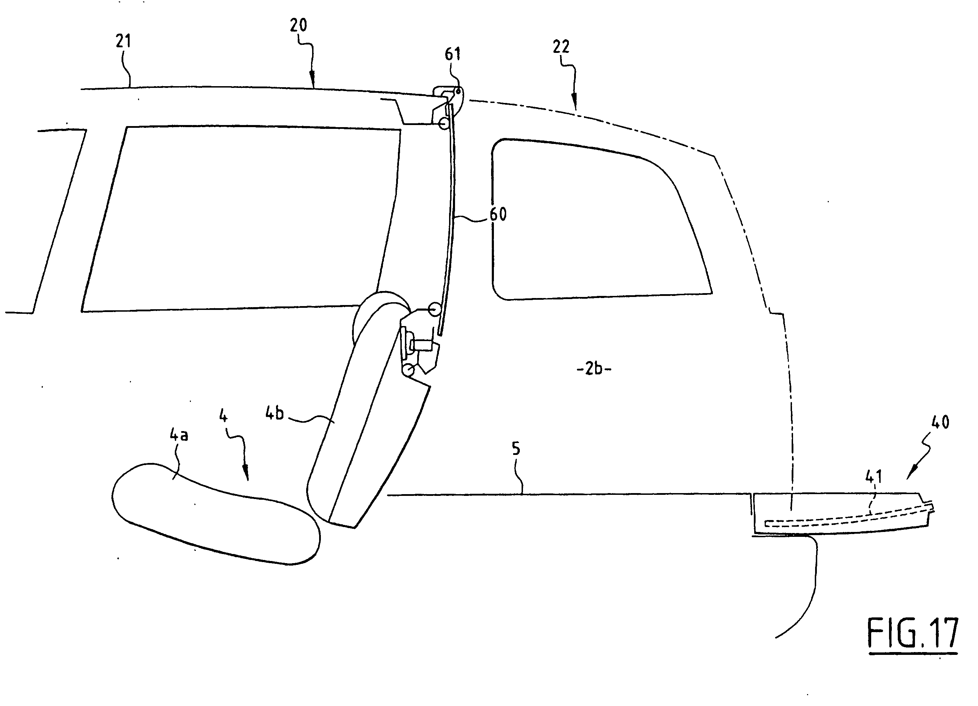

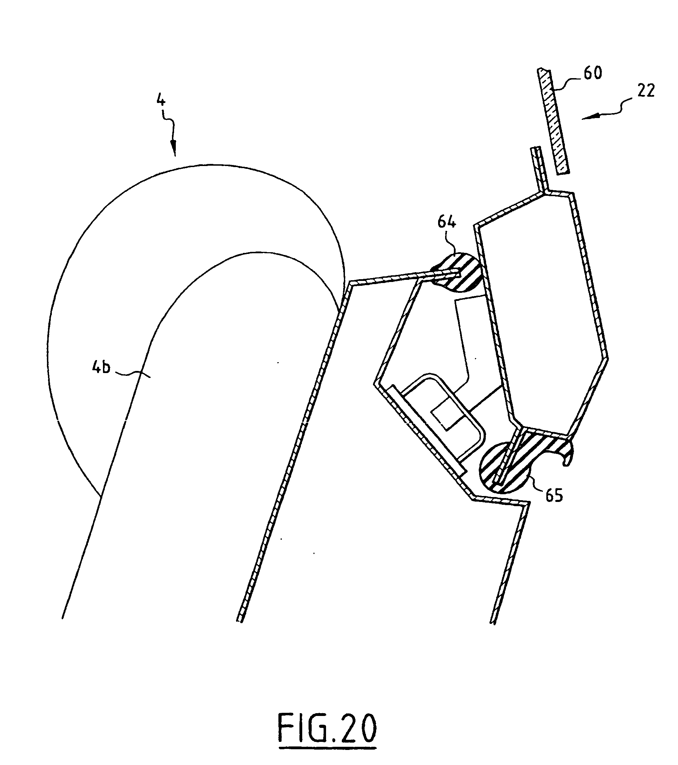

Selon un autre mode de réalisation représenté sur les Figs. 14 à 20, la partie mobile 22 du pavillon 20 est formée par une vitre 60 montée pivotante par une extrémité antérieure, autour d'un axe horizontal 61 de direction transversale et situé à l'aplomb du dossier 4b de la rangée de sièges arrière 4, entre la position prolongeant la partie fixe 21 du pavillon 20, comme représentée sur les Figs. 4 et 16 et une position sensiblement verticale dans le prolongement de la partie arrière dudit dossier 4b, comme représentée sur les Figs. 15 et 17.

Dans la position rabattue, la vitre 60 constitue la lunette arrière de l'habitacle 2 notamment dans le cas où le véhicule automobile 1 est en configuration à benne ouverte.

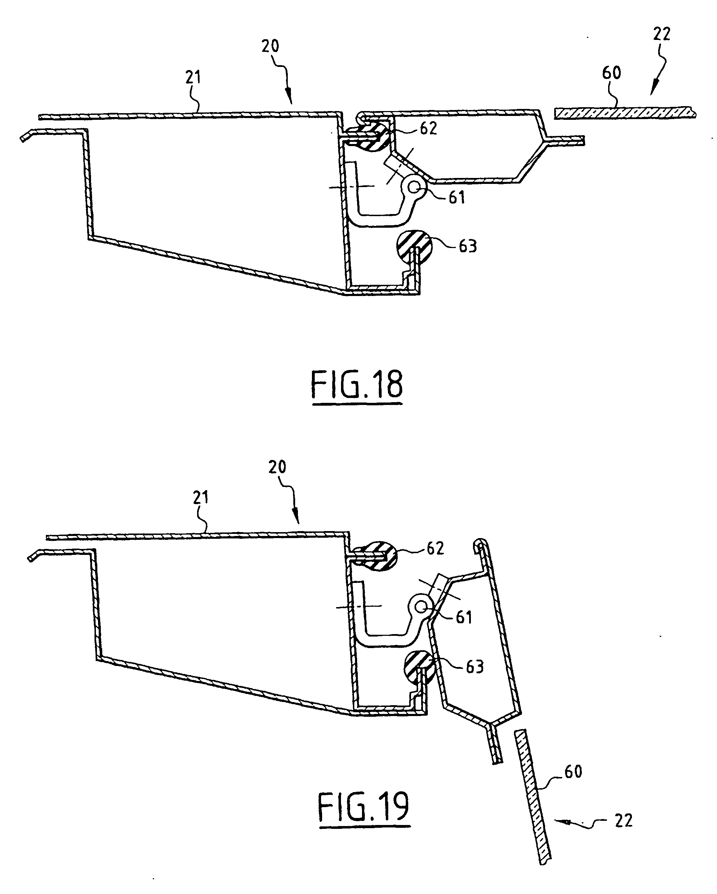

Afin d'assurer l'étanchéité entre l'habitacle 2 et l'extérieur du véhicule automobile, le bord antérieur de la vitre 60 coopère, dans sa position sensiblement horizontale, avec un joint d'étanchéité 62 porté par la partie fixe 21 du pavillon 20 et, dans sa position sensiblement verticale, avec un joint d'étanchéité 63 également porté par ladite partie fixe 21 (Figs. 18 et 19).

De même, le bord postérieur de la vitre 60 coopère, dans sa position sensiblement horizontale, avec un joint d'étanchéité 64 porté par la structure du dossier 4b de la rangée de sièges arrière 4.

Enfin, le bord postérieur de la vitre 60 comporte un joint d'étanchéité 65 destiné à coopérer avec la vitre coulissante 41 du hayon 40 dans la configuration break du véhicule automobile 1.

Dans la configuration break du véhicule automobile 1, la rangée de sièges arrière 4 peut être placée en position d'utilisation ou en position escamotée.

Dans la position d'utilisation, la séparation entre la partie avant 2a et la partie arrière 2b de l'habitacle est assurée par la vitre 45 en position déployée et, dans la position escamotée de ladite rangée de sièges arrière 4, la séparation entre la partie avant 2a et la partie arrière 2b de l'habitacle est assurée par la vitre 8 en position déployée.

Dans cette configuration de type break, la partie mobile 22 du pavillon 21 est placée dans le prolongement de la partie fixe 21, les vitres de custode 13a et le hayon 40 sont fermés et la vitre coulissante 41 dudit hayon 40 est déployée de façon à constituer la lunette arrière du véhicule automobile.

La vitre 22b de la partie mobile 22 du pavillon 20 peut être ouverte pour transporter les objets de grande longueur.

Dans la configuration de type pick-up du véhicule automobile, la partie mobile 22 du pavillon 20 est escamotée soit par coulissement au-dessus de la partie fixe 21, soit par basculement dans une position sensiblement verticale en prolongement du dossier 4b de la rangée de sièges arrière 4.

De plus, les vitres 13a de custode sont rabattues et placées dans les coffres 18 et la vitre coulissante 41 du hayon 40 est escamotée dans la partie inférieure dudit hayon 40. Ce hayon 40 peut aussi être placé dans une position sensiblement horizontale de façon à prolonger le plancher 5 et à augmenter la surface de chargement du véhicule automobile.

Dans cette configuration, la rangée de sièges arrière 4 peut être rabattue afin d'augmenter encore la surface de chargement du plancher 5.

Dans tous les cas, le véhicule automobile selon l'invention permet de passer facilement d'une configuration break à une configuration pick-up de telle sorte que ce véhicule puisse servir aussi bien pour le transport de passagers ou de charges dans un habitacle entièrement fermé, que pour le transport de charges dans une benne ouverte vers le haut et facilement accessible par l'arrière.

Le véhicule automobile selon l'invention est particulièrement économique du fait de sa polyvalence et peut éviter l'achat d'un second véhicule, pour un utilisateur désirant effectuer des transports sur route à grande distance de charges ou de passagers, dans de bonnes conditions de confort et de protection climatique, et des transports purement utilitaires de charges volumineuses, dans une utilisation locale.

## Revendications

1. Véhicule automobile de type break transformable en un véhicule à benne ouverte vers le haut, appelé pick-up, et comportant un habitacle (2) ayant une partie avant (2a) contenant un poste de conduite et au moins un siège avant (3) et une partie arrière (2b) comportant au moins une rangée de sièges arrière (4) comprenant au moins une assise (4a) et au moins un dossier (4b) déplaçables entre une position d'utilisation et une position escamotée dans laquelle ladite assise (4a) est basculée sensiblement verticalement derrière ledit siège avant (3) et ledit dossier (4b) est basculé vers l'avant du véhicule dans le prolongement du plancher (5) et délimitée par :
- un plancher (5),
- deux parois latérales (10),
- un pavillon (20) couvrant l'ensemble de l'habitacle (2) et comportant, successivement dans une direction longitudinale du véhicule et de l'avant vers l'arrière, une partie fixe (21) et une partie mobile (22) déplaçable entre une position sensiblement horizontale dans le prolongement de ladite partie fixe (21) et une position escamotée dans la configuration à benne ouverte du véhicule, et
- à sa partie postérieure, par un hayon (40) pivotant dont une partie supérieure forme une vitre arrière (41) escamotable de manière coulissante à l'intérieur d'une partie inférieure de ce hayon (40),
**caractérisé en ce qu'**il comporte des moyens (45) séparant la partie avant (2a) de l'habitacle (2) constituant une cabine par rapport à la partie arrière (2b) dudit habitacle (2) dans la configuration à benne ouverte du véhicule et dans la position d'utilisation de la rangée de sièges arrière (4) et des moyens (8) de séparation de l'habitacle (2) derrière ledit siège avant (3) dans la position escamotée de la rangée de sièges arrière (4).

2. Véhicule automobile selon la revendication 1, **caractérisé en ce que** les moyens de séparation sont formés par une vitre (8) déplaçable par coulissement entre une position escamotée dans l'assise (4a) de la rangée de sièges arrière (4) et une position déployée sensiblement verticale coopérant avec des éléments d'étanchéité (50) disposés sur les parois latérales (10) et le pavillon (20) de l'habitacle (2).

3. Véhicule automobile selon la revendication 1 ou 2, **caractérisé en ce que** les parois latérales (10) comportent chacune, dans la partie arrière de l'habitacle (2), une vitre (13a) de custode escamotable par basculement à l'intérieur d'un coffre (18) ménagé dans la paroi latérale (10) correspondante, ladite vitre (13a) de custode étant escamotée dans la configuration à benne ouverte du véhicule.

4. Véhicule automobile selon l'une quelconque des revendications précédentes, **caractérisé en ce que** la partie mobile (22) du pavillon (20) est déplaçable par translation au moyen de mécanismes de coulissement entre la position prolongeant la partie fixe (21) et la position escamotée située au-dessus de ladite partie fixe (21).

5. Véhicule automobile selon la revendication 4, **caractérisé en ce que** les mécanismes de coulissement de la partie mobile (22) sont dissimulés dans des barres de toit (30) fixées sur les bords latéraux du pavillon (20).

6. Véhicule automobile selon la revendication 4 ou 5, **caractérisé en ce que** la partie mobile (22) est formée par un cadre (22a) comportant une ouverture (23) munie d'une vitre (22b) déplaçable, dans la configuration break du véhicule, entre une position ouverte et une position fermée.

7. Véhicule automobile selon l'une quelconque des revendications précédentes, **caractérisé en ce que** les moyens de séparation de la partie avant (2a) par rapport à la partie arrière (2b) de l'habitacle (2) dans la configuration à benne ouverte sont formés par une vitre (45) déplaçable par coulissement entre une position escamotée dans le dossier (4b) de la rangée de sièges arrière (4) et une position déployée sensiblement verticale coopérant avec des éléments d'étanchéité (55) disposés sur les parois latérales (10) et le pavillon (20) de l'habitacle (2).

8. Véhicule automobile selon les revendications 2 à 7, **caractérisé en ce que** les éléments d'étanchéité (50, 55) sont formés chacun par au moins un joint d'étanchéité (55a) longitudinal et en forme de U, fixé dans un logement (56) ménagé dans les parois latérales (10) et le pavillon (20), ledit logement (56) étant obturable par une trappe (57) coulissante.

9. Véhicule automobile selon les revendications 2 et 7, **caractérisé en ce que** les éléments d'étanchéité (50, 55) sont formés chacun par au moins un joint d'étanchéité (55b) longitudinal et en forme de U, ledit joint (55b) étant monté sur un support (58) pivotant entre une position escamotée dans un logement (56) ménagé dans les parois latérales (10) et le pavillon (20) et une position en saillie de ce logement (56), ledit logement (56) étant obturable par une trappe (57) coulissante.

10. Véhicule automobile selon l'une quelconque des revendications 1 à 3, **caractérisé en ce que** la partie mobile (22) du pavillon (20) est formée par une vitre (60) montée pivotante par une extrémité antérieure, autour d'un axe horizontal (61) de direction transversale, situé à l'aplomb du dossier (4b) de la rangée de sièges arrière (4), entre la position prolongeant la partie fixe (21) du pavillon (20) et une position sensiblement verticale dans le prolongement de la partie arrière du dossier (4b) de ladite rangée de sièges arrière (4).

11. Véhicule automobile selon la revendication 10, **caractérisé en ce que** le bord antérieur de la vitre (60) coopère avec un joint d'étanchéité (62 ; 63) porté par la partie fixe (21) du pavillon (20), respectivement dans la position prolongeant ladite partie fixe (21) et dans la position sensiblement verticale.

12. Véhicule automobile selon les revendications 10 et 11, **caractérisé en ce que** les bords latéraux et le bord inférieur de la vitre (60) coopèrent avec des joints d'étanchéité (64) fixés sur les parois latérales (10) de l'habitacle (2) et le bord supérieur du dossier (4b) de la rangée de sièges arrière (4).

## Patentansprüche

1. Kraftfahrzeug des Typs Kombi, der in ein nach oben offenes Transportfahrzeug, das Pick-up genannt wird, umgewandelt werden kann und eine Fahrgastzelle (2) umfasst, die einen vorderen Teil (2a) mit einem Führerstand und wenigstens einem Vordersitz (3) und einen hinteren Teil (2b) umfasst, wobei der hintere Teil (2b) wenigstens eine hintere Sitzreihe (4) besitzt, die wenigstens eine Sitzfläche (4a) und wenigstens eine Rückenlehne (4b) umfasst, wobei die Rückenlehne (4b) zwischen einer Verwendungsposition und einer umgeklappten Position verlagerbar ist, in der die Sitzfläche (4a) im Wesentlichen vertikal hinter den Vordersitz (3) gekippt ist und die Rückenlehne (4b) in der Verlängerung des Bodens (5) zur Vorderseite des Fahrzeugs gekippt ist, wobei der hintere Teil (2b) begrenzt ist durch:
- einen Boden (5),
- zwei Seitenwände (10),
- ein Fahrzeugdach (20), das die gesamte Fahrgastzelle (2) abdeckt und nacheinander in Längsrichtung des Fahrzeugs und von vorn nach hinten einen festen Teil (21) und einen beweglichen Teil (22), der zwischen einer im Wesentlichen horizontalen Stellung in der Verlängerung des festen Teils (21) und einer umgeklappten Stellung in der offenen Transporterkonfiguntion des Fahrzeugs verlagerbar ist, umfasst, und
- in seinen hinteren Abschnitt durch eine schwenkbare Heckklappe (40), wovon ein oberer Teil eine Heckscheibe (41) bildet, die gleitend in einen unteren Teil dieser Heckklappe (40) einfahrbar ist,
**gekennzeichnet durch** Mittel (45), die in der offenen Transporterkonfiguration des Fahrzeugs und in der Nutzstellung der hinteren Sitzreihe (4) den eine Kabine bildenden vorderen Teil (2a) der Fahrgastzelle (2) von dem hinteren Teil (2b) der Fahrgastzelle trennen, und Trennmittel (8), die die Fahrgastzelle (2) in der umgeklappten Stellung der hinteren Sitzreihe (4) hinter dem Vordersitz (3) abtrennen, umfasst.

2. Kraftfahrzeug nach Anspruch 1, **dadurch gekennzeichnet, dass** die Trennmittel durch eine Scheibe (8) gebildet sind, die durch Gleiten zwischen einer in den Sitz (4a) der hinteren Sitzreihe (4) eingefahrenen Position und einer im Wesentlichen vertikalen ausgefahrenen Position verlagerbar ist und mit Dichtungselementen (50) zusammenwirkt, die an den Seitenwänden (10) und dem Fahrzeugdach (20) der Fahrgastzelle (2) angeordnet sind.

3. Kraftfahrzeug nach Anspruch 1 oder 2, **dadurch gekennzeichnet, dass** die Seitenwände (10) jeweils im hinteren Teil der Fahrgastzelle (2) eine Scheibe (13a) über dem Hinterrad umfassen, die durch Schwenken in einen in der entsprechenden Seitenwand (10) ausgesparten Aufnahmeraum (18) einklappbar ist, wobei die Scheibe (13) über dem Hinterrad in der offenen Transporterkonfiguration des Fahrzeugs eingeklappt ist.

4. Kraftfahrzeug nach einem der vorhergehenden Ansprüche, **dadurch gekennzeichnet, dass** der bewegliche Teil (22) des Fahrzeugdachs (20) mittels Gleitmechanismen zwischen der den festen Teil (21) verlängernden Position und der über dem festen Teil (21) befindlichen eingefahrenen Position translatorisch verlagerbar ist.

5. Kraftfahrzeug nach Anspruch 4, **dadurch gekennzeichnet, dass** die Gleitmechanismen des beweglichen Teils (22) in Fahrzeugdachstäben (30), die an den Seitenrändern des Fahrzeugdachs (20) befestigt sind, verborgen sind.

6. Kraftfahrzeug nach Anspruch 4 oder 5, **dadurch gekennzeichnet, dass** der bewegliche Teil (22) durch einen Rahmen (22a) gebildet ist, der eine Öffnung (23) aufweist, die in der Kombi-Konfiguration des Fahrzeugs zwischen einer offenen Position und einer geschlossenen Position verlagerbar ist.

7. Kraftfahrzeug nach einem der vorhergehenden Ansprüche, **dadurch gekennzeichnet, dass** die Mittel, die in der offenen Transporterkonfiguration den vorderen Teil (2a) von dem hinteren Teil (2b) der Fahrgastzelle (2) trennen, durch eine Scheibe (45) gebildet sind, die gleitend zwischen einer in die Rückenlehne (4b) der hinteren Sitzreihe (4) eingefahrenen Stellung und einer im Wesentlichen vertikalen ausgefahrenen Stellung verlagerbar ist und mit Dichtungsmitteln (55) zusammenwirkt, die an den Seitenwänden (10) und dem Fahrzeugdach (20) der Fahrgastzelle (2) zusammenwirken.

8. Kraftfahrzeug nach den Ansprüchen 2 bis 7, **dadurch gekennzeichnet, dass** die Dichtungselemente (50, 55) jeweils durch wenigstens eine longitudinale und U-förmige Dichtung (55a) gebildet sind, die in einem Aufnahmeraum (56) befestigt ist, der in den Seitenwänden (10) und im Fahrzeugdach (20) ausgespart ist, wobei der Aufnahmeraum (56) durch eine gleitende Kappe (57) verschließbar ist.

9. Kraftfahrzeug nach den Ansprüchen 2 und 7, **dadurch gekennzeichnet, dass** die Dichtungselemente (50, 55) jeweils durch wenigstens eine longitudinale und U-fömige Dichtung (55b) gebildet sind, wobei die Dichtung (55b) an einem Träger (58) angebracht ist, der zwischen einer eingeklappten Stellung in einem Aufnahmeraum (56), der in den Seitenwänden (10) und im Fahrzeugdach (20) ausgespart ist, und einer von diesem Aufnahmeraum (56) vorstehenden Stellung schwenkbar ist, wobei der Aufnahmeraum (56) durch eine gleitende Kappe (57) verschließbar ist.

10. Kraftfahrzeug nach einem der Ansprüche 1 bis 3, **dadurch gekennzeichnet, dass** der bewegliche Teil (22) des Fahrzeugdachs (20) durch eine Scheibe (60) gebildet ist, die an einem vorderen Ende um eine in transversaler Richtung verlaufende horizontale Achse (61), die sich lotrecht über der Rückenlehne (4b) der hinteren Sitzreihe (4) befindet, zwischen der den festen Teil (21) des Fahrzeugdachs (20) verlängernden Stellung und einer im Wesentlichen vertikalen Stellung in der Verlängerung des hinteren Teils der Rückenlehne (4b) der hinteren Sitzreihe (4) schwenkbar angebracht ist.

11. Kraftfahrzeug nach Anspruch 10, **dadurch gekennzeichnet, dass** der vordere Rand der Scheibe (60) in der den festen Teil (21) verlängernden Stellung bzw. in der im Wesentlichen vertikalen Stellung mit einer Dichtung (62; 63), die von dem festen Teil (21) des Fahrzeugdachs (20) getragen wird, zusammenwirkt.

12. Kraftfahrzeug nach den Ansprüchen 10 und 11, **dadurch gekennzeichnet, dass** die Seitenränder und der untere Rand der Scheibe (60) mit Dichtungen (64) zusammenwirken, die an den Seitenwänden (10) der Fahrgastzelle (2) bzw. am oberen Rand der Rückenlehne (4b) der hinteren Sitzreihe (4) befestigt sind.

## Claims

1. Estate vehicle convertible to an open-top, so-called pick-up vehicle and having a passenger area (2) with a front section (2a) containing a driver's area and at least one front seat (3) and a rear section (2b) comprising at least one row of rear seats (4) including at least one seat surface (4a) and at least one backrest (4b), which can be moved between a position of use and a fold-away position, in which said seat surface (4a) is folded essentially vertically behind said front seat (3) and said backrest (4b) is folded towards the front of the vehicle in extension of the floor (5), and defined by:
• a floor (5),
• two side walls (10),
• a roof (20) covering the whole of the passenger area (2) and comprising, in succession in a longitudinal direction of the vehicle and from front to rear: a fixed section (21) and a mobile section (22), which can be moved between an essentially horizontal position in extension of said fixed section (21) and a fold-away position in the open pick-up configuration of the vehicle, and
• in its back section by a hinged tail gate (40), an upper section of which forms a rear window (41) that can be retracted by sliding into a lower section of this tail gate (40),
**characterised in that** it comprises means (45) separating the front section (2a) of the passenger area (2) to form a compartment in relation to the rear section (2b) of said passenger area (2) when in the open pick-up configuration of the vehicle and when the row of rear seats (4) is in the position of use, and means (8) to separate the passenger area (2) behind said front seat (3) when the row of rear seats (4) is in the fold-away position.

2. Motor vehicle according to Claim 1, **characterised in that** the separation means are formed by a window (8), which can be moved by sliding between a retracted position in the seat surface (4a) in the row of rear seats (4) and an extended essentially vertical position cooperating with sealing elements (50) disposed on the side walls (10) and the roof (20) of the passenger area (2).

3. Motor vehicle according to Claim 1 or 2, **characterised in that** in the rear section of the passenger area (2), the side walls (10) each have a rear quarter window (13a), which can be retracted by folding inside a case (18) arranged in the corresponding side wall (10), said rear quarter window (13a) being retracted in the open pick-up configuration of the vehicle.

4. Motor vehicle according to any one of the preceding claims, **characterised in that** the mobile section (22) of the roof (20) can be displaced by translational movement by means of sliding mechanisms between the position extending the fixed section (21) and the fold-away position located above said fixed section (21).

5. Motor vehicle according to Claim 4, **characterised in that** the sliding mechanisms of the mobile section (22) are concealed in the roof bars (30) fixed to the side edges of the roof (20).

6. Motor vehicle according to Claim 4 or 5, **characterised in that** the mobile section (22) is formed by a frame (22a) having an opening (23) fitted with a window (22b), which, in the pick-up configuration of the vehicle, can be moved between an open position and a closed position.

7. Motor vehicle according to any one of the preceding claims, **characterised in that** the means for separation of the front section (2a) in relation to the rear section (2b) of the passenger area (2) in the open pick-up configuration are formed by a window (45), which can be moved by sliding between a retracted position in the backrest (4b) of the row of rear seats (4) and an extended essentially vertical position cooperating with sealing elements (55) disposed on the side walls (10) and the roof (20) of the passenger area (2).

8. Motor vehicle according to Claims 2 to 7, **characterised in that** the sealing elements (50, 55) are each formed by at least one longitudinal, U-shaped sealing strip (55a) fixed in a groove (56) arranged in the side walls (10) and the roof (20), said groove (56) being sealable by a sliding flap (57).

9. Motor vehicle according to Claims 2 to 7, **characterised in that** the sealing elements (50, 55) are each formed by at least one longitudinal, U-shaped seating strip (55b), said strip (55b) being mounted on a support (58) pivoting between a position retracted in a groove (56) arranged in the side walls (10) and the roof (20) and a position projecting from this groove (56), said groove (56) being sealable by a sliding flap (57).

10. Motor vehicle according to any one of Claims 1 to 3, **characterised in that** the mobile section (22) of the roof (20) is formed by a window (60) mounted to pivot at a front end around a horizontal axis (61) in transverse direction located perpendicular to the backrest (4b) of the row of rear seats (4) between the position extending the fixed section (21) of the roof (20) and an essentially vertical position in extension of the rear section of the backrest (4b) of said row of rear seats (4).

11. Motor vehicle according to Claim 10, **characterised in that** the front edge of the window (60) cooperates with a sealing strip (62; 63) attached to the fixed section (21) of the roof (20) respectively in the position extending said fixed section (21) and in the essentially vertical position.

12. Motor vehicle according to Claims 10 and 11, **characterised in that** the side edges and lower edge of the window (60) cooperate with sealing strips (64) fixed to the side walls (10) of the passenger area (2) and the upper edge of the backrest (4b) of the row of rear seats (4).
